Europäisches Patentamt

European Patent Office

Office européen des brevets

(11) Veröffentlichungsnummer: **0 202 415**
**B1**

(12) **EUROPÄISCHE PATENTSCHRIFT**

(45) Veröffentlichungstag der Patentschrift: **24.10.90**

(21) Anmeldenummer: **86103590.5**

(22) Anmeldetag: **17.03.86**

(51) Int. Cl.⁵: **B 25 J 17/02,** B 25 J 18/00, B 25 J 9/12, B 25 J 9/08

(54) **Antriebsvorrichtung zur Erzeugung von Schwenkbewegungen und weiteren Bewegungen.**

(30) Priorität: **21.05.85 DE 3518104**

(43) Veröffentlichungstag der Anmeldung:
**26.11.86 Patentblatt 86/48**

(45) Bekanntmachung des Hinweises auf die Patenterteilung:
**24.10.90 Patentblatt 90/43**

(84) Benannte Vertragsstaaten:
**AT CH FR GB LI**

(56) Entgegenhaltungen:
**EP-A-0 138 308**
**FR-A-2 315 629**
**GB-A-2 143 205**

**SOVIET INVENTIONS ILLUSTRATED, Woche D31, 9. September 1981, Zusammenfassung Nr. P62 H2117, Derwent Publications Ltd**

(73) Patentinhaber: **Arnold Müller GmbH & Co. KG**
**Klosterstrasse 48**
**D-7312 Kirchheim/Teck (DE)**

(72) Erfinder: **Wurst, Karl-Heinz, Dipl.-Ing.**
**Nelkenstrasse 1**
**D-7015 Korntal-Münchingen (DE)**

(74) Vertreter: **Kratzsch, Volkhard, Dipl.-Ing.**
**Mülbergerstrasse 65**
**D-7300 Esslingen (DE)**

## Beschreibung

Die Erfindung bezieht sich auf eine Antriebsvorrichtung zur Erzeugung von Schwenkbewegungen und weiteren Bewegungen, mit einem Gelenkantrieb, der eine im Gelenk angeordnete Antriebseinheit aufweist, gemäß dem Oberbegriff des Anspruchs 1. Eine Vorrichtung dieser Gattung ist aus der "Soviet Inventions Illustrated", Woche D31, 9.9.1981 bekannt.

Eine weitere Antriebsvorrichtung ergibt sich z.B. aus DE—A—33 03 555. Hierbei ist im Inneren des Gelenkes ein einziger Motor mit beidseitig davon angeordneten und angetriebenen Getrieben enthalten. Eine derartige Antriebsvorrichtung eignet sich mit Vorteil insbesondere für Industrieroboter sowie sonstige Handhabungsgeräte. Insbesondere bei Industrierobotern sind mehrere Antriebsvorrichtungen miteinander zu einem Gerät verquickt. Zu derartigen miteinander zu verquickenden Antriebselementen gehören u.a. auch Linearantriebe mit Gewindespindel und Spindelmutter, z.B. auch solche mit feststehender Kugelumlaufspindel und mittels eines Antriebsmotors rotatorisch angetriebener Spindelmutter (DE—A—32 36 526). Linearantriebe dieser Art enthalten einen eigenen Antriebsmotor, der den Linearantrieb für eine flexible Anwendung im Rahmen eines modularen Systems sehr teuer macht und auch dazu führt, daß man bei den verschiedenartigen Verwendungen solcher Linearantriebe immer auf den Motor Rücksicht nehmen muß, der sehr oft störend im Wege ist und daher einen platzsparenden Einbau behindert. Kombiniert man einen solchen Linearantrieb mit einem Gelenkantrieb, führt dies zu großen Kosten, großem Gewicht und erheblichem Platzbedarf. Soll eine mit diesen Komponenten gestaltete Antriebsvorrichtung bei späterer Umplanung, Umbau od. dgl. unter entsprechender Anpassung umgebaut werden, geht dies in aller Regel nur durch Anschaffung völlig neuer Antriebsvorrichtungen, da die einzelnen Elemente nicht baukastenähnlich austauschbar und versetzbar sind.

Der Erfindung liegt die Aufgabe zugrunde, eine Antriebsvorrichtung der eingangs genannten Art zu schaffen, die einen einfachen und kleinen mechanischen Aufbau mit hoher Leistungsdichte auch bei Kombination mehrerer Achsen, und zwar Grundachsen wie Handachsen, für Schwenkbewegungen und/oder Drehbewegungen und ein geringes Spiel aufweist und die eine baukastenmäßige Zusammenstellung nach Modularprinzip ermöglicht.

Die Aufgabe ist erfindungsgemäß durch die Merkmale im Kennzeichnungsteil des Patentanspruchs 1 gelöst.

Eine Antriebsvorrichtung, bei der die Antriebseinrichtung aus zwei koaxialen Motoren mit je einem Getriebe und einem Weg- und Geschwindigkeitsmeßsystem kombiniert ist und bei der die Antriebseinheit eine Schwenkbewegung um die Gelenkachse, eine Drehbewegung um eine zur Gelenkachse quer verlaufende Drehhachse und beide Bewegungen auch überlagert erzeugen kann, wurde bereits vorgeschlagen.

Bei herkömmlichen Antriebsvorrichtungen dagegen benötigt man für jede Bewegung um eine Achse einen besonderen Gelenkantrieb, d.h. einen für Schwenkbewegung und einen weiteren für eine Drehbewegung des erstgenannten Gelenkantriebes um eine zur Schwenkachse etwa rechtwinklige Drehachse. Durch die Anordnung zweier Motoren mit je einem Getriebe und den sonstigen Elementen kann jeder Motor gleichzeitig mit dem anderen für eine Schwenkbewegung oder für eine Drehbewegung eingesetzt werden. Aufgrund der beiden Motoren mit jeweils zugeordnetem Getriebe lassen sich diese Motoren unterschiedlich ansteuern, z.B. mit gleicher Antriebsrichtung oder auch gegenläufiger Antriebsrichtung und ferner mit gleichen Winkelgeschwindigkeiten wie auch mit unterschiedlichen Winkelgeschwindigkeiten. Dementsprechend sind gesteuerte Bewegungen um die Gelenkachse sowie die dazu rechtwinklig verlaufende Drehachse möglich.

Die erfindungsgemäße Antriebsvorrichtung macht sich bei der beschriebenen Antriebseinheit die Erkenntnis zunutze, daß bei dieser Antriebseinheit dann, wenn beide Antriebsmotoren gegenläufig angesteuert sind, eine relative Drehbarkeit erzeugt wird und mithin diese Antriebseinheit damit alle Elemente für einen Antrieb aufweist, um ein weiteres, damit zu koppelndes Antriebselement rotatorisch über die Abtriebs-Drehbewegung des Gelenkantriebes antreiben zu können. Dieses weitere Antriebselement besteht aus einem Linearantrieb in den eine rotatorische Antriebsbewegung eingeleitet wird, die aufgrund dieser Art des Antriebselementes in eine lineare Translationsbewegung umgeformt wird. Dadurch, daß der Gelenkantrieb mit der beschriebenen Antriebseinheit im Inneren lösbar und auswechselbar an einem Antriebselement angebracht ist und dessen Abtriebs-Drehbewegung in das Antriebselement zur Erzeugung einer Antriebs-Drehbewegung eingeleitet wird, wird der Gelenkantrieb zum Antrieb für das Antriebselement, an dem er angebracht ist. Das Antriebselement selbst benötigt daher keinen Antrieb. Dadurch wird das Antriebselement kompakter, leichter und als Komponente für einen Baukasten vor allem erheblich billiger. Die Erfindung wird damit in höchstem Maße allen Anforderungen an ein Baukastensystem gerecht, bei dem für die verschiedensten Anwendungsfälle auf nur wenige Grundantriebelemente zurückgegriffen werden kann. So kann man eine Antriebsvorrichtung zusammenstellen, bei der der beschriebene Gelenkantrieb mit innerer Antriebseinheit fest, jedoch lösbar und auswechselbar an einem Linearantrieb angebracht wird, wobei der Dreh-Antrieb des Gelenkantriebes dann als quasi Antriebsmotor für den Linearantrieb dient, dessen sonst nötiger eigener Antriebsmotor entfallen kann. Eine solche baukastenmäßige Verquickung dieser beiden Komponenten kann vielfältig benutzt werden, z.B. im Bereich der Grundachsen und/oder der Handachsen eines Industrieroboters. Ferner eignet sich eine derartige Antriebsvorrichtung als Linear- und Schwenkachse für Handhabungsgeräte zum Beschicken von Werkzeugmaschinen od. dgl. Maschinen, ferner als unabhängige Bearbeitungseinheit als Zusatz in Werkzeugmaschinen od. dgl. Die Antriebsvorrichtung ist generell überall dort einsetzbar, wo z.B. eine lineare Stellbewegung und eine Schwenkbewegung gefordert werden, ganz gleich, ob die lineare Stellbewegung horizontal, vertikal oder irgendwie schräg im Raum erfolgen soll. Dank der erfindungsgemäßen Antriebsvorrichtung ist der Benutzer wesentlich flexibler. Er kann derartige Antriebsvorrichtungen bei nötigem Umbau durch Demontieren und Austauschen der Baukastenelemente umfunktionieren, ohne daß jeweils eine Neuanschaffung kompletter Geräte oder Anlagen erforderlich ist. Von Vorteil ist zugleich, daß z.B. hinsichtlich des Antriebselementes, z.B. eines Linearantriebes, keine sonst motorbedingten Platzprobleme bestehen.

In den Ansprüchen 2—10 sind weitere vorteilhafte Merkmale der Erfindung enthalten.

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen, wodurch jedoch alle diese Anspruchsmerkmale als an dieser Stelle ausdrücklich offenbart zu gelten haben.

Weitere Einzelheiten und Vorteile ergeben sich aus der nachfolgenden Beschreibung.

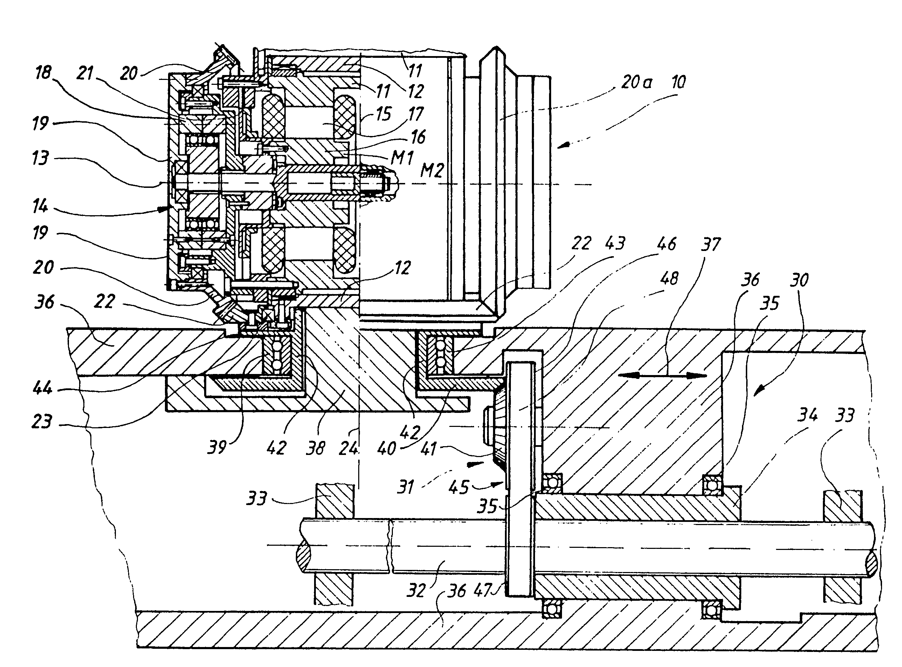

Die Erfindung ist nachfolgend anhand eines in der Zeichnung gezeigten Ausführungsbeispieles näher erläutert. Die Zeichnung zeigt eine schematische, teilweise geschnittene Seitenansicht einer Antriebsvorrichtung zur Erzeugung einer Schwenkbewegung mit alternativer oder überlagerter Linearbewegung.

Die Antriebsvorrichtung weist einen Gelenkantrieb 10 mit zwei Gelenkhälften 11 und 12 auf, die um die Gelenkachse 13 schwenkbeweglich verbunden sind. Der Gelenkantrieb 10 enthält eine im Gelenk angeordnete Antriebseinheit 14. Die Antriebseinheit 14 ist beidseitig der Symmetrieebene 15 gleich ausgebildet, weswegen nachfolgend lediglich die Elemente der Antriebseinheit 14 links der Symmetrieebene 15 erläutert sind.

Die Antriebseinheit 14 weist einen elektrischen Antriebsmotor mit Rotor 16 und Stator 17 auf, wobei der Stator 17 Teil der einen Gelenkhälfte 11 und der Rotor 16 Teil der anderen Gelenkhälfte 12 ist. Zwischen beiden Gelenkhälften 11 und 12 sitzt in an sich bekannter Weise links der Gelenkachse 13 ein Getriebe 18, das z.B. als Planetengetriebe oder Harmonic-Drive-Getriebe ausgebildet ist. Der eine Teil des Getriebes 18 wird vom Rotor 16 des Motors M1 angetrieben, während der Abtriebsteil des Getriebes 18 mit der Gelenkhälfte 11 gekoppelt ist. Das Getriebe 18 ist am Ende der Gelenkachse 13 mit einem Deckel 19 abgeschlossen, an dem ein Kegelrad 20 gehalten ist. Ferner ist zwischen dem Rotor 16 und dem Stator 17 ein Weg- und Geschwindigkeitsmeßsystem angeordnet, von dem eine vom Rotor 16 angetriebene Scheibe 21 zu sehen ist. Rechts der Symmetrieebene 15 ist noch einmal die gleiche Antriebseinheit wie die Antriebseinheit 14 links angeordnet.

Beide Kegelräder 20 und 20a, die bei Einschalten der Motoren M1 bzw. M2 angetrieben werden, kämmen mit einem beiden gemeinsamen Kegelrad 22, das mittels eines Lagers 23 in bezug auf die Gelenkhälfte 12 drehbar um eine Drehachse 24 gelagert ist. Die Drehachse 24 verläuft quer zur Gelenkachse 13, und zwar zumindest im wesentlichen rechtwinklig dazu.

Werden die Motoren M1 und M2 angesteuert, wobei die Winkelgeschwindigkeit jedes Motors bzw. die Winkelgröße der Umlaufbewegung jeweils gleich und dabei auch gleich gerichtet sind, erfolgt eine reine Schwenkbewegung des Gelenkantriebes 10 um die Gelenkachse 13. Beide Kegelräder 20, 20a stützen sich am gemeinsamen Kegelrad 22 ab, was zur genannten reinen Schwenkbewegung der Gelenkhälften 11, 12, relativ zueinander um die Gelenkachse 13 ohne Drehung des Kegelrades 22 führt.

Werden die Motoren M1 und M2 dagegen so angesteuert, daß sie zwar mit gleicher Winkelgeschwindigkeit aber nun gegensinnig zueinander umlaufen, so hat dies eine relative Drehbewegung des gesamten Gelenkantriebes 10 um die Drehachse 24 relativ zu Kegelrad 22 zur Folge. Werden beide Motoren M1 und M2 so angesteuert, daß sie gleichsinnig, jedoch mit unterschiedlich großen Winkelgeschwindigkeiten umlaufen, so hat dies eine Schwenkbewegung um die Gelenkachse 13 und eine gleichzeitige Drehbewegung um die Drehachse 24 zur Folge. Bei der reinen Schwenkbewegung um die Schwenkachse 13 stehen die vollen Momente der Motoren M1 und M2 zur Verfügung, ebenfalls bei reiner Drehbewegung um die Drehachse 24. Bei gekoppelter Bewegung sowohl mit Schwenkung als auch mit Drehung findet eine Leistungstrennung statt.

Die Besonderheit dieser Antriebsvorrichtung liegt darin, daß dieser Gelenkantrieb 10 als Komplettbaustein lösbar und auswechselbar an einem weiteren Antriebselement 30 angebracht ist und daß die Abtriebs-Drehbewegung, die bei Drehung um die Drehachse 24 am Kegelrad 22 ansteht, als Antriebs-Drehbewegung in das Antriebselement 30 eingeleitet wird. Hierzu ist das Antriebselement 30 mit dem die Abtriebs-Drehbewegung des Gelenkantriebes 10 ausführenden Gelenkantriebsglied in Form des Kegelrades 22 über getriebliche Mittel 31 getrieblich gekoppelt, wobei das Gelenkantriebsglied in Form des Kegelrads 22 für das Antriebselement 30 den Antrieb bildet.

Das Antriebselement 30 ist hier als Linearantrieb ausgebildet. Dieser weist eine Gewindespindel 32 in Form einer Kugelumlaufspindel auf, die feststehend und drehfest an einem Linearantriebsträger 33 gehalten ist. Bestandteil dieses Linearantriebes ist ferner eine Spindelmutter 34, die axial beweglich und frei drehbar auf der Gewindespindel 32 sitzt. Die Spindelmutter 34 ist mittels Lagern 35 frei drehbar in einem Linearantriebsschlitten 36 gelagert, der in herkömmlicher Weise mittels nicht weiter gezeigter Führungen relativ zum Linearantriebsträger 33 translatorisch in Pfeilrichtung 37 verschiebbar ist. Mit seiner Gelenkhälfte 12 sitzt der Gelenkantrieb 10 fest auf dem Linearantriebsschlitten 36. Die Befestigung geschieht beispielsweise über ein besonderes Befestigungsglied 38 an der Gelenkhälfte 12, das durch eine Öffnung 39 des Linearantriebsschlittens 36 hindurch- und diesen so hintergreift, daß der Gelenkantrieb 10 mit der Gelenkhälfte 12 fest mit dem Linearantriebsschlitten 36 verbunden und von diesem getragen ist. Das Befestigungsglied 38 kann ein Schnellpsannelement sein, das eine relativ schnelle Demontage des Gelenkantriebes 10 von dem Linearantriebsschlitten 36 gestattet.

Das die Abtriebs-Drehbewegung ausführende Gelenkantriebsglied in Form des Kegelrades 22 des Gelenkantriebes 10 ist beim gezeigten Ausführungsbeispiel über die getrieblichen Mittel 31 mit der Spindelmutter 34 zu deren Drehantrieb gekoppelt. Es versteht sich, daß bei einem anderen, nicht gezeigten Ausführungsbeispiel die getrieblichen Mittel 31 entfallen und der Antrieb direkt erfolgen kann.

Die getrieblichen Mittel 31 weisen ein Kegelradgetriebe mit einem Kegelrad 40 und einem damit in Eingriff stehenden zweiten Kegelrad 41 auf. Das Kegelrad 40 sitzt drehfest am dem Gelenkantrieb 10 abgekehrten Ende einer Hohlwelle 42, die in der Öffnung 39 mittels Lagern 43 axial und radial gelagert ist. Die Hohlwelle 22 ist mit einem dem Gelenkantrieb 10 zugewandten Flansch 44 versehen, der mit dem die Abtriebs-Drehbewegung abgebenden Kegelrad 22 in drehmomentübertragender Verbindung steht.

Das zweite Kegelrad 41 ist drehbar im Linearantriebsschlitten 36 gelagert. Von dort führt ein getrieblicher Übertrager 45 getrieblich auf die Spindelmutter 34. Der Übertrager besteht beim gezeigten Ausführungsbeispiel aus einem Riementrieb, der eine vom zweiten Kegelrad 41 angetriebene Scheibe 46, eine drehfest auf der Spindelmutter 34 sitzende weitere Scheibe 47 und einen beide kuppelnden Antriebsriemen 48 aufweist. Der Riementrieb ist hier als Zahnriementrieb gestaltet, wobei beide Scheiben 46, 47 und der Antriebsriemen 48 jeweils Zähne aufweisen.

Es versteht sich, daß bei einem anderen, nicht gezeigten Ausführungsbeispiel auch ein anderer getrieblicher Übertrager 45, z.B. ein Zahnradgetriebe, vorgesehen sein kann oder statt dessen dieser Übertrager ganz entfallen kann, wobei dann das zweite Kegelrad 41 gleich drehfest auf der Spindelmutter 34 angeordnet ist.

Bei dieser Gestaltung der Antriebsvorrichtung sind die Gelenkhälften 11 und 12 des Gelenkantriebes 10 nach wie vor um die Gelenkachse 13 relativ zueinander schwenkbar, und zwar dann, wenn die beiden Motoren M1 und M2 so angesteuert sind, daß sie gleichsinnige Antriebsbewegungen mit gleichen Winkelgeschwindigkeiten durchführen. Dann schwenkt die Gelenkhälfte 11 um die Gelenkachse 13 relativ zu anderen Gelenkhälfte 12 und dem Linearantriebschlitten 36.

Werden statt dessen die Motoren M1 und M2 so angesteuert, daß ihre Winkelgeschwindigkeiten zueinander gegensinnig gerichtet sind, so hat dies eine rotatorische Antriebsbewegung des Kegelrades 22 um die Drehachse 24 zur Folge. Dadurch wird das Kegelrad 40 und über dieses das zweite Kegelrad 41 angetrieben, über das mittels des Zahnriementriebes die Spindelmutter 34 rotatorisch angetrieben wird, die dadurch auf der feststehenden Gewindespindel 32 umläuft und damit dem Linearantriebsschlitten 36 eine translatorische Bewegung in Pfeilrichtung 37 erteilt. Auf diese Weise wird also das Antriebselement 30 vom Gelenkantrieb 10 linear in Pfeilrichtung 37 angetrieben.

Werden die Motoren M1 und M2 so angesteuert, daß sie gleichsinnig jedoch mit unterschiedlichen Winkelgeschwindigkeiten umlaufen, ergibt sich eine Schwenkbewegung um die Gelenkachse 13 mit gleichzeitiger translatorischer Antriebsbewegung in Pfeilrichtung 37.

Für die beiden Hauptbewegungen—Schwenken um die Gelenkachse 13 sowie Linearantrieb in Pfeilrichtung 37—kann jeweils die gesamte Motorleistung der Motoren M1 und M2 eingesetzt werden. Die Energiedichte ist damit höher als dann, wenn hierfür zwei getrennte Antriebe eingesetzt werden. Von besonderem Vorteil ist, daß die Antriebsvorrichtung in höchstem Maße die Anforderungen an ein Baukastensystem erfüllt, da nun Grundelemente für die vorschiedenen Anwendungsfälle vorhanden sind und eingesetzt werden können. So läßt sich die Antriebsvorrichtung sowohl für Grundachsen als auch für Handhabungsachsen insbesondere bei Industrierobotern einsetzen. Ein Einsatz als Linearachse im Bereich der Grundachsen und/oder der Handachsen für einen solchen Industrieroboter, der nur um lotrechte Achsen schwenkbewegliche Elemente hat, ist ebenso möglich wie ein Einsatz im Bereich von Werkzeugmaschinen, Montagerobotern od. dgl. Dort, wo bei Verwirklichung verschiedenster Antriebsvorrichtung jeweils spezielle, darauf ausgerichtete Bestandteile eingesetzt werden und bei Umstellungen jeweils neue Geräte angeschafft werden müssen, ist ein baukastenartiges Zusammensetzen mit vorhandenen Elementen, nämlich Gelenkantrieb 10 einerseits und Antriebselement 30 für den Linearantrieb andererseits, möglich. Dies führt zu wesentlichen Kostenersparnissen und eröffnet ein großes Feld von Kombinationsmöglichkeiten, ohne daß man jeweils neue Geräte anschaffen muß. Dadurch wird der Anwender beim Einsatz von Antriebsvorrichtungen, insbesondere Industrierobotern, flexibler. Bei Umbau ist ein Umfunktionieren wesentlich einfacher möglich. Vorteilhaft ist zugleich im Bereich des linearen Antriebselementes 30, daß der bisher hierfür nötige Drehantrieb zur Drehbetätigung der Spindelmutter 34 entfällt und damit das lineare Antriebselement 30 wesentlich billiger, kleiner, kompakter und leichter werden kann. Dadurch ergeben sich bei den verschiedenen Anwendungs- und Einsatzfällen keine Raum- und Platzprobleme, die sonst ein bei solchen linearen Antriebselementen 30 erforderlicher Antriebsmotor zur Folge hatte. Dadurch ist erreicht, daß man das Antriebselement 30 praktisch beliebig im Raum plazieren und auch einbauen kann, ohne daß irgendein zusätzlicher Antriebsmotor dafür stören würde. Man ist auch frei hinsichtlich der Anordnung insoweit, wo jeweils der Linearantriebsschlitten 36 sitzen solle. Es versteht sich, daß das lineare Antriebselement 30 ein lineares Antriebselement für Werkzeugmaschinen, sonstige Maschinen oder Anlagen oder auch für Handhabungsgeräte, Industrieroboter od, dgl. sein kann, wobei das Antriebselement horizontal, vertikal oder schräg im Raum verlaufen kann. Ist das Antriebselement im Bereich der Grundachsen oder auch der Handachsen eines Industrierroboters angeordnet, so verläuft hier die Bewegungsrichtung z.B. in Z-Richtung, d.h. vertikal.

## Patentansprüche

1. Antriebsvorrichtung zur Erzeugung von Schwenkbewegungen und weiteren Bewegungen, mit einem Gelenkantrieb (10), der eine im Gelenk angeordnete Antriebseinheit aufweist, wobei die Antriebseinheit aus zwei koaxialen Motoren (M1, M2) mit je Motor einem Getriebe kombiniert ist und eine Schwenkbewegung um die Gelenkachse (13), eine Drehbewegung um eine zur Gelenkachse (13) quer verlaufende Drehachse (24) und beide Bewegungen überlagert erzeugt und wobei der Gelenkantrieb (10) an einem Element angebracht ist, dadurch gekennzeichnet, daß das Element als Antriebselement (30) ausgebildet ist, in das die Abtriebs-Drehbewegung des Gelenkantriebes (10) um dessen Drehachse (24) als Antriebs-Drehbewegung eingeleitet wird, daß die Antriebseinheit je Motor ein Weg- und Geschwindigkeitsmeßsystem aufweist, daß das Antriebselement (30) über getriebliche Mittel (31, 45) mit dem die Abtriebs-Drehbewegung des Gelenkantriebs (10) ausführenden Gelenkantriebsglied (22) getrieblich gekoppelt ist und das Gelenkantriebsglied (22) den Antrieb des Antriebselementes (30) bildet, daß das Antriebselement (30) als Linearantrieb ausgebildet ist, von dem ein Element direkt oder über die getrieblichen Mittel (31, 45) mit der vom Gelenkantrieb (10) angeleiteten Antriebs-Drehbewegung beaufschlagbar ist, und daß der Gelenkantrieb (10) mit einer Gelenkhälfte (12) fest, jedoch lösbar und auswechselbar, mit einem Schlitten (36) des Linearantriebes verbunden ist.

2. Antriebsvorrichtung nach Anspruch 1, dadurch gekennzeichnet, daß der Linearantrieb eine Gewindespindel (32) mit Spindelmutter (34) darauf aufweist.

3. Antriebsvorrichtung nach Anspruch 2, dadurch gekennzeichnet, daß die Gewindespindel (32) des Linearantriebs drehfest an einem Linearantriebsträger (33) gehalten ist, daß die Spindelmutter (34) frei drehbar in einem Linearantriebsschlitten (36) gelagert ist, der relativ zum Linearantriebsträger (33) translatorisch verschiebbar ist, und daß der Gelenkantrieb (10) am Linearantriebsschlitten (36) lösbar und auswechselbar angebracht ist und dessen die Abtriebs-Drehbewegung ausführendes Gelenkantriebsglied (22) direkt oder über getriebliche Mittel (31, 45) mit der Spindelmutter (34) zu deren Drehantrieb gekoppelt ist.

4. Antriebsvorrichtung nach Anspruch 2 oder 3, dadurch gekennzeichnet, daß die Drehachse (24) und die Längsmittelachse der Gewindespindel (32) quer, insbesondere rechtwinklig, zueinander verlaufen.

5. Antriebsvorrichtung nach einem der Ansprüche 1—4, gekennzeichnet, durch ein Kegelradgetriebe (40, 41) zwischen dem die Abtriebs-Drehbewegung ausführenden Gelenkantriebsglied (22) und dem Antriebselement (30), insbesondere dem Linearantrieb, z.B. dessen Spindelmutter (34).

6. Antriebsvorrichtung nach Anspruch 5, dadurch gekennzeichnet, daß das Kegelradgetriebe eine von einem Befestigungsglied (38) des Gelenkantriebes (10) durchsetzte Hohlwelle (42) mit Kegelrad (40) aufweist, die am Gelenkantriebsglied (22), das die Abtriebs-Drehbewegung ausführt, drehfest angreift.

7. Antriebsvorrichtung nach Anspruch 5 oder 6, dadurch gekennzeichnet, daß das Antriebselement (30), insbesondere der Linearantrieb, z.B. dessen Linearantriebschlitten (36), ein mit dem Kegelrad (40) in Eingriff stehendes zweites Kegelrad (41) aufweist, das direkt oder mittelbar am Antriebsteil, z.B. an der Spindelmutter (34) des Linearantriebes, angreift.

8. Antriebsvorrichtung nach Anspruch 7, dadurch gekennzeichnet, daß das zweite Kegelrad (41) mittels eines getrieblichen Übertragers (45) auf das Antriebselement (30), insbesondere den Linearantrieb, z.B. dessen Spindelmutter (34), arbeitet.

9. Antriebsvorrichtung nach Anspruch 8, dadurch gekennzeichnet, daß der getriebliche Übertrager (45) einen Riemenantrieb mit einer Scheibe (47) am Antriebselement (30), insbesondere am Linearantrieb, z.B. auf dessen Spindelmutter (34), einer weiterern von dem zweiten Kegelrad (41) angetriebenen Scheibe (46) und einem beide Scheiben (46, 47) kuppelnden Antriebsriemen (48) aufweist.

10. Antriebsvorrichtung nach Anspruch 9, dadurch gekennzeichnet, daß der Riementrieb (46—48) als Zahnriementrieb ausgebildet ist.

## Revendications

1. Dispositif d'entraînement pour la réalisation de mouvements pivotants et autres, comprenant un entraînement articulé (10) muni d'une unité d'entraînement logée dans l'articulation, l'unité d'entraînement constituée par deux moteurs coaxiaux (M1, M2) étant combinée pour chaque moteur avec un engrenage et engendrant un mouvement pivotant autour de l'axe d'articulation (13), un mouvement de rotation autour d'un axe de rotation (24) orienté transversalement à l'axe d'articulation (13) et la superposition des deux mouvements, et l'entraînement articulé (10) étant monté sur un élément, caractérisé en ce que l'élément est conformé en élément moteur (30) auquel le mouvement de rotation de sortie de l'entraînement articulé (10) autour de son axe de rotation (24) est transmis en tant que mouvement de rotation d'entraînement; que l'unité d'entraînement comprend pour chaque moteur un système de mesure de distance et de vitesse; que l'élément moteur (30) est couplé mécaniquement, par l'intermédiaire de moyens de transmission (31, 45), avec l'organe d'entraînement articulé (22) qui effectue le mouvement de rotation de sortie de l'entraînement articulé (10) et que l'organe d'entraînement articulé (22) constitue l'entraînement de l'élément moteur (30); que l'élément moteur (30) est conformé en entraînement linéaire dont l'un des éléments peut être commandé directement ou par l'intermédiaire de moyens de transmission (31, 45) par le mouvement de rotation de sortie dérivé de l'entraînement articulé (10); et que l'une des moitiés d'articulation (12) de l'entraînement articulé (10) est reliée solidement mais de manière amovible et interchangeable à un chariot (36) de l'entraînement linéaire.

2. Dispositif d'entraînement selon la revendication 1, caractérisé en ce que l'entraînement linéaire comprend une broche filetée (32) portant un écrou (34).

3. Dispositif d'entraînement selon la revendication 2, caractérisé en ce que la broche filetée (32) de l'entraînement linéaire est maintenue de manière rigide en rotation sur un support d'entraînement linéaire (33); que l'écrou (34) est monté de façon à pouvoir tourner librement dans un chariot d'entraînement linéaire (36) lequel peut effectuer des mouvements de translation par rapport au support d'entraînement linéaire (33); et que l'entraînement articulé (10) est monté de manière amovible et interchangeable sur le chariot d'entraînement linéaire (36) et que son organe d'entraînement articulé (22) qui effectue le mouvement de rotation de sortie est couplé, directement ou par l'intermédiaire de moyens de transmission (31, 45), avec l'écrou (34) pour en assurer l'entraînement en rotation.

4. Dispositif d'entraînement selon l'une des revendications 2 ou 3, caractérisé en ce que l'axe de rotation (24) et l'axe médian longitudinal de la broche filetée (32) sont orientés transversalement, et notamment orthogonalement, l'un par rapport à l'autre.

5. Dispositif d'entraînement selon l'une des revendications 1 à 4, caractérisé en ce qu'il comprend un engrenage à roues coniques (40, 41) entre l'organe d'entraînement articulé (22) et l'élément moteur (30), en particulier l'entraînement linéaire, par exemple l'écrou (34) de celui-ci.

6. Dispositif d'entraînement selon la revendication 5, caractérisé en ce que l'engrenage à roues coniques comprend un arbre creux (42) avec roue conique (40) traversé par un organe de fixation (38) de l'entraînement articulé (10) et relié de manière rigide en rotation à l'organe d'entraînement articulé (22) qui effectue le mouvement de rotation de sortie.

7. Dispositif d'entraînement selon l'une des revendications 5 ou 6, caractérisé en ce que l'élément moteur (30), en particulier l'entraînement linéaire, par exemple le chariot d'entraînement linéaire (36) de ce dernier, comprend une seconde roue conique (41) qui est en prise avec la roue conique (40) et agit directement ou indirectement sur l'élément moteur, par exemple l'écrou (34) de l'entraînement linéaire.

8. Dispositif d'entraînement selon la revendication 7, caractérisé en ce que la seconde roue conique (41) agit au moyen d'un translateur à engrenage (45) sur l'élément moteur (30), en particulier sur l'entraînement linéaire, par exemple sur l'écrou (34) de celui-ci.

9. Dispositif d'entraînement selon la revendication 8, caractérisé en ce que le translateur à engrenage (45) comprend une commande à courroie avec une poulie (47) sur l'élément moteur (30), en particulier sur l'entraînement linéaire, par exemple sur l'écrou (34) de celui-ci, avec une seconde poulie (46) entraînée par la seconde roue conique (41), et une courroie de transmission (48) couplant les deux poulies (46, 47).

10. Dispositif d'entraînement selon la revendication 9, caractérisé en ce que la commande à courroie (46 à 48) est conformée en transmission à courroie dentée.

**Claims**

1. A drive device for generating pivoting movements and further movements, with an articulating drive (10) having a drive unit disposed in the joint, the drive unit comprising two coaxial motors (M1, M2), each motor being combined with a geared transmission and generating a pivoting movement about the axis (13) of articulation, a rotary movement about a pivot axis (24) extending transversely of the axis (13) of articulation, both movements being superimposed, the articulating drive (10) being mounted on an element, characterised in that the element is constructed as a driving element (30) into which the output rotary movement of the articulating drive (10) about its axis of rotation (24) is initiated as a driving-rotary movement and in that the drive unit comprises for each motor a path and speed measuring system and in that the driving element (30) is coupled in transmissive fashion via transmission means (31, 45) to the articulating drive member (22) which performs the output rotary movement of the articulating drive (10), the articulating drive member (22) constituting the drive of the driving element (30) and in that the driving element (30) is constructed as a linear drive, of which one element can directy or through the transmission means (31, 45) be subject to the driving rotary movement derived from the articulating drive (10) and in that the articulating drive (10) has one joint half (12) which is rigidly but separably and interchangeably connected to a slide (36) of the linear drive.

2. A drive device according to Claim 1, characterised in that the linear drive comprises a threaded spindle (32) with a spindle nut (34) mounted on it.

3. A drive device according to Claim 2, characterised in that the threaded spindle (32) of the linear drive is rotationally rigidly maintained on a linear drive carrier (33) and in that the spindle nut (34) is mounted for free rotation in a linear drive slide (36) which is capable of a translatory movement in relation to the linear drive carrier (33) and in that the articulating drive (10) is separably and interchangeably mounted on the linear drive slide (36), its articulating drive member (22) which performs the output rotary movement being coupled directly or through transmission means (31, 45) to the spindle nut (34) in order to drive it in rotating fashion.

4. A drive device according to Claim 2 or 3, characterised in that the axis of rotation (24) and the longitudinal central axis through the threaded spindle (32) extend transversely, particularly at right-angles, to each other.

5. A drive device according to one of Claims 1 to 4, characterised by a bevel gear transmission (40, 41) between the articulating drive member (22) which performs the output rotary movement and the driving element (30), particularly the linear drive, for example the spindle nut (34) thereof.

6. A drive device according to Claim 5, characterised in that the bevel gear transmission comprises a hollow shaft (42) with a bevel gear (40) and through which passes a fixing member (38) of the articulating drive (10) and which in rotationally rigid manner engages the articulating drive member (22) which performs the output rotary movement.

7. A drive device according to Claim 5 or 6, characterised in that the driving element (30), particularly the linear drive, for example its linear drive slide (36), comprises, meshing with the bevel gear (40), a second bevel gear (41) which directly or indirectly engages the drive part, e.g. the spindle nut (34) of the linear drive.

8. A drive device according to Claim 7, characterised in that the second bevel gear (41) works by means of a transmissive transfer means (45) on the driving element (30), particularly the linear drive, for example the spindle nut (34) thereof.

9. A drive device according to Claim 8, characterised in that the transmissive transfer means (45) comprises a belt drive with a pulley (47) on the driving element (40), particularly on the linear drive, for example on the spindle nut (34) thereof, another pulley (46) driven by the second bevel gear (41) and a drive belt (48) which couples the two pulleys (46, 47) together.

10. A drive device according to Claim 9, characterised in that the belt drive (46 to 48) is a toothed belt drive.